# EUROPÄISCHE PATENTSCHRIFT

(11) **EP 2 512 757 B1**
(45) Veröffentlichungstag und Bekanntmachung des Hinweises auf die Patenterteilung: **18.09.2013**
(21) Anmeldenummer: 10813062.6
(22) Anmeldetag: 14.12.2010
(51) Int. Cl.: B25J 15/00

(54) **BEARBEITUNGSSTATION UND VERFAHREN ZU DEREN BETRIEB**
PROCESSING STATION AND METHOD FOR THE OPERATION THEREOF
STATION D'USINAGE ET SON PROCÉDÉ DE FONCTIONNEMENT

(30) Priorität: 16.12.2009 DE 102009058633
(43) Veröffentlichungstag der Anmeldung: 24.10.2012
(73) Patentinhaber: Magna Exteriors & Interiors Management GmbH, 63877 Sailauf (DE)
(72) Erfinder: LAEIS, Christoph, 53819 Neunkirchen-Seelscheid (DE); MÜLLER, Sven, 31228 Peine (DE); CORAZOLLA, Anton, 37073 Göttingen (DE); FRÖHLICH, Willi, 55268 Nieder-Olm (DE)
(74) Vertreter: Völger, Silke Beatrix
(86) Internationale Anmeldenummer: PCT/DE2010/001464
(87) Internationale Veröffentlichungsnummer: WO 2011/072651

(56) Entgegenhaltungen:
- EP-A1- 0 128 487
- EP-A2- 0 343 552
- FR-A1- 2 570 630
- US-A- 4 655 676

## Beschreibung

Die Erfindung betrifft eine Bearbeitungsstation für Kunststoffformteile sowie ein Verfahren zu deren Betrieb und insbesondere eine Bearbeitungsstation für Fahrzeugverkleidungsteile und ein entsprechendes Verfahren zum Betrieb.

Bei der Herstellung von großen Kunststoffbauteilen und insbesondere Fahrzeugverkleidungsteilen wie bspw- lackierten Stoßfängern oder Karosserieverkleidungsteilen ist eine Reihe von Bearbeitungsschritten erforderlich. Typisch werden hierzu sog. bauteilspezifische Anlagen verwendet, in denen die Teile auf angepassten Transportvorrichtungen zwischen mehreren Bearbeitungseinrichtungen bewegt werden. Diese Bearbeitungseinrichtungen sind dabei regelmäßig nur für eine Bearbeitungsmaßnahme ausgelegt, wie z.B. für das Ausstanzen einer Öffnung oder eines Fensters in einem Fahrzeugverkleidungsteil. Dadurch können die Bearbeitungseinrichtungen eine hohe Taktrate erzielen. Allerdings lassen diese bauteilspezifischen Anlagen praktisch keine flexible Produktion zu. Jede wesentliche Änderung hinsichtlich der Geometrie der Werkstücke und der Bearbeitungsmaßnahme erfordert einen Wechsel der Werkzeuge und ein Neueinrichten der Fertigung. Dies ist meist nicht ohne längere Unterbrechung zu bewerkstelligen.

Zusammengefasst liegen die wesentlichen Nachteile dieser bauteilspezifischen Anlagen in
- einem erhöhten Aufwand bei der Entwicklung, Projektierung und Konstruktion;
- einen hohen Aufwand beim Umrüsten und Einrichten für den Wechsel des Produkts;
- einen hohen Aufwand für Wartung und Instandhaltung der Werkzeuge und Anlagenkomponenten;
- einer verringerten Wirtschaftlichkeit bei kleinen Losgrößen;
- einem höheren Personalaufwand für die Bedienung; und
- einem erhöhten Flächenbedarf für die Aufstellung.

Aus der EP 0 128 487 A1 ist eine Be- und Entladeeinrichtung für eine Bearbeitungsstation zum Bearbeiten von Werkstücken mit einer Werkzeughalterung für ein auswechselbares Werkzeug und einer Werkstückhalterung mit längsverschiebbaren und drehbaren Greifern bekannt Der Greifer ist dabei lösbar mit einem Halteglied verbindbar, um ein Wechseln von beliebig gestalteten Werkzeugen zu ermöglichen. Hierbei weist das Halteglied an der Verbindungsstelle mit dem Greifer immer die gleiche Ausgestaltung auf. Die Halterung für das Werkzeug kann beliebig ausgestaltet sein. Die Werkzeuge sowie die unterschiedlichen Halteglieder sind in einem Magazin gelagert.

Des Weiteren ist aus der US 4,655,676 A eine Bearbeitungsstation bekannt, bei der an einem Arm eines Roboters ein Revolverkopf angeordnet ist, der unterschiedliche Greifer zur Werkzeug- oder Werkstückaufnahme aufweist.

Die vorliegende Erfindung stellt sich die Aufgabe, eine Anlage zur Bearbeitung von Kunststoffbauteilen und insbesondere Fahrzeugverkleidungsteilen zu schaffen, mit der eine Produktion bei sehr kleinen Losgrößen wirtschaftlich durchgeführt werden kann.

Die Anlage ist kompakt und robust aufgebaut, und kann ohne Demontage und Montage innerhalb der Produktion versetzt werden.

Diese Aufgabe löst die vorliegende Erfindung unter zwei verschiedenen, einheitlichen Lösungsaspekten. Unter einem ersten Aspekt löst die vorliegende Erfindung die genannte Aufgabe durch eine Bearbeitungsstation mit den in Anspruch 1 angegebenen Merkmalen. Unter einem zweiten Aspekt löst die vorliegende Erfindung die genannte Aufgabe durch ein Verfahren zum Betrieb einer Bearbeitungsstation mit den in Anspruch 4 angegeben Merkmalen.

Die erfindungsgemäße Bearbeitungsstation erlaubt es, produktspezifische Anlagenkomponenten modular zu halten und austauschbar auszuführen. Diese Module lassen sich während des Betriebs automatisch wechseln und sind auf die material- und geometriebedingten Eigenschaften des Produktes angepasst. Damit kann die erfindungsgemäße Bearbeitungsstation eine aufeinanderfolgende Bearbeitung von Werkstücken mit wesentlich unterschiedlichen Geometrien und/oder abweichenden Bearbeitungsmaßnahmen wirtschaftlich und ohne neue Einrichtung ausführen.

Zudem benötigt die erfindungsgemäße Bearbeitungsstation vorteilhaft deutlich weniger Platz als konventionelle Universalanlagen und Fertigungsstraßen.

Des Weiteren ergibt sich durch den Einsatz der erfindungsgemäßen Bearbeitungsstation vorteilhaft eine Senkung der Wartungs- und Instandhaltungskosten. Die Menge der vorzuhaltenden Ersatzteile ist aufgrund der Nutzung identischer Anlagenkomponenten für eine Vielzahl unterschiedlicher Produkte deutlich gesenkt.

Darüber hinaus kann mit der erfindungsgemäßen Bearbeitungsstation eine bessere Auslastung einer Fertigungsanlage erzielt werden, wenn dort verschiedene Produkte in wechselnder Stückzahl hergestellt werden. Dies resultiert aus der Flexibilität der erfindungsgemäßen Bearbeitungsstation, die eine ad-hoc Änderung der Materialflüsse in der Fertigung zulässt. Daneben kann die erfindungsgemäße Bearbeitungsstation auch den Investitionsbedarf einer typischen Fertigungsstätte bei Erweiterung des Produktspektrums erheblich senken. Zu einer solchen Aufrüstung werden lediglich bauteilspezifische Aufnahmen und eventuell einige zusätzliche Werkzeuge benötigt.

Schließlich erlaubt die erfindungsgemäße Bearbeitungsstation eine nahezu beliebige Anpassung der Bearbeitungsmaßnahmen und die Einbeziehung weiterer Maßnahmen wie z.B. zum Kleben oder Fügen.

Vorteilhafte Ausgestaltungen und Weiterbildungen der erfindungsgemäßen Vorrichtung und des erfindungsgemäßen Verfahrens sind in den Unteransprüchen angegeben.

Eine bevorzugte Ausführungsform gemäß der vorliegenden Erfindung wird nachfolgend beispielhalber beschrieben, wobei veranschaulichend auf die beigefügten Zeichnungen Bezug genommen wird. Darin zeigen:
- Fig. 1: eine schematische Ansicht auf eine Bearbeitungsstation gemäß der vorliegenden Erfindung von oben;
- Fig. 2: eine schematische Ansicht auf einen Teil der Bearbeitungsstation gemäß Fig. 1 von der Seite; und
- Fig. 3: eine schematische Detailansicht auf das Werkzeug in der Situation gemäß Fig. 2.

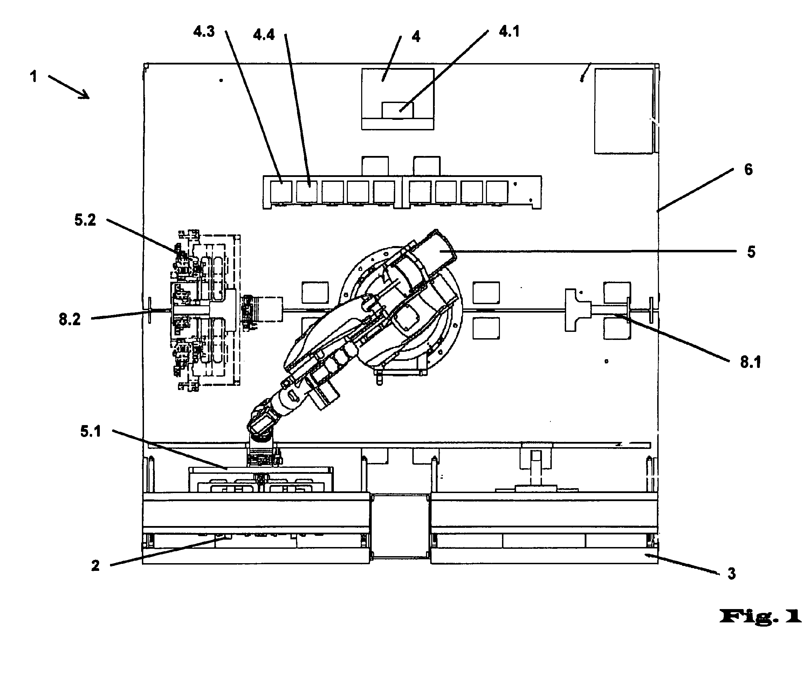

Fig. 1 zeigt eine Bearbeitungsstation 1 zum Ausstanzen von Ausschnitten und/oder Öffnungen in einem Fahrzeugstoßfänger als eine bevorzugte Ausführungsform der vorliegenden Vorrichtungserfindung. Als wesentliche Baugruppen umfasst die dargestellte Bearbeitungsstation 1 zwei Ablagebereiche 2, 3 für die Zufuhr und Entnahme der Werkstücke W durch einen Arbeiter, eine Stanzeinrichtung 4 zum Ausstanzen von Ausschnitten oder Fenstern und einen Handhabungsroboter 5. Die genannten wesentlichen Baugruppen sind zusammen mit weiteren peripheren Baugruppen wie bspw. Schaltschränken, Sicherheitseinrichtungen und Bedienpulten auf einem Grundrahmen 6 angebracht. Dadurch ist die Lage der Baugruppen relativ zueinander dauerhaft exakt eingehalten und überdies kann die Bearbeitungsstation 1 unzerlegt als Gesamtheit transportiert oder verlagert werden. Der Grundrahmen 6 trägt weiterhin eine Schutzeinhausung 7, die ein Betreten oder Hineingreifen während des Betriebs verhindert.

Die Ablagebereiche 2, 3 enthalten auf die vorgesehenen Werkstücke W angepasste Haltevorrichtungen, auf denen die zu bearbeitenden oder bereits bearbeiteten Werkstücke, hier die lackierten Fahrzeugstoßfänger, positionsgenau abgelegt werden können.

Der Handhabungsroboter 5 ist zentral in der Bearbeitungsstation 1 angeordnet und dazu eingerichtet, das in einem Ablagebereich 2 bereit gestellte Werkstück W aufzunehmen, zu der Stanzeinrichtung 4 zu bewegen und anschleißend in dem anderen Ablagebereich 3 abzulegen. Der Handhabungsroboter 5 ist wie in der Zeichnung dargestellt zweckmäßig ein in mehreren Achsen knick- und drehbarer mehrgliedriger Arm, an dessen Ende eine auf die vorgesehenen Werkstücke angepasste Aufspannvorrichtung 5.1 angeordnet ist. Damit kann das betreffende Werkstück W in einer genau definierten Lage gegriffen und festgehalten werden. Eine weitere Aufspannvorrichtungen 5.1 für Werkstücke mit einer anderen Geometrie ist auf einem Haltegestell 8 innerhalb der Bearbeitungsstation 1 abgelegt.

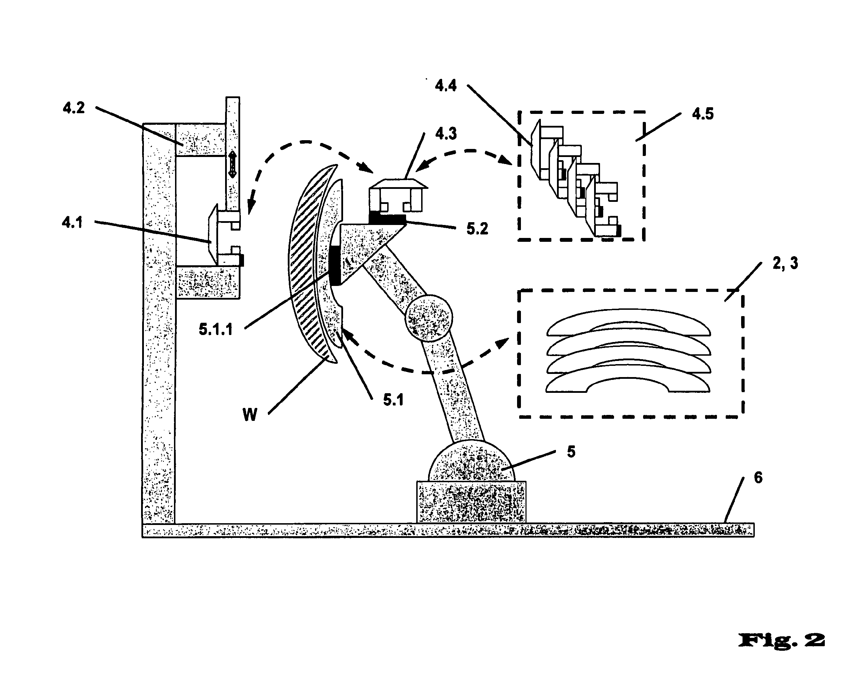

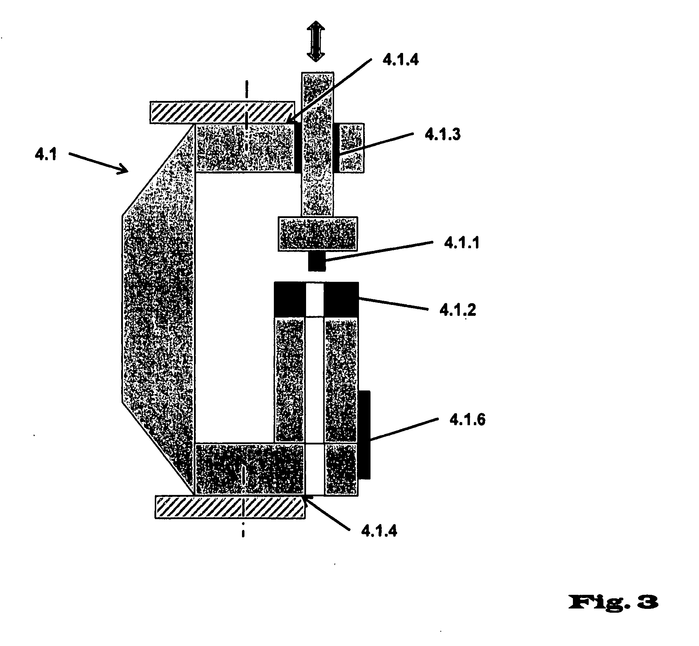

Die Stanzeinrichtung 4 ist dazu eingerichtet, an einem von dem Handhabungsroboter 5 in der richtigen Lage zugeführten Bauteil Ausschnitte und Fenster anzubringen und umfasst gemäß den Fig. 2 und 3 eine Stanzpresse 4.2 mit einem wechselbaren Stanzwerkzeug 4.1. Dieses wiederum umfasst in an sich bekannter Weise ein Oberwerkzeug 4.1.1 und ein Unterwerkzeug 4.1.2, die miteinander durch eine Linearführung 4.1.3 beweglich verbunden sind. Der Grundkörper des Stanzwerkzeugs 4.1 trägt das Unterwerkzeug 4.1.2 und weist passgenau ausgeführte Kontaktflächen 4.1.4 für die Aufnahme in der Stanzpresse 4.2 auf.

Weitere ähnliche Stanzwerkzeuge 4.3, 4.4 sind in einem Stanzwerkzeugmagazin 4.5 untergebracht. Der Wechsel des in der Stanzpresse 4.2 enthaltenen Stanzwerkzeugs 4.1 wird gleichfalls durch den Handhabungsroboter 5 vorgenommen. Dazu ist daran vorzugsweise neben der Aufspannvorrichtung 5.1 eine Aufnahme 5.3 zum Greifen einer korrespondierenden Kupplung 4.1.6 an dem Stanzwerkzeugen 4.1 angeordnet. Diese Aufnahme 5.3 ist efindungsgemäß so ausgeführt, dass eine Verwendung auch dann möglich ist, wenn in der Auf spannvorrichtung 5.1 ein Werkstück W aufgenommen ist.

Zur Bearbeitung eines Kunststoffteils wird zunächst der Handhabungsroboter 5 angesteuert, die Aufspannvorrichtung 5.1 in den ersten Ablagebereich 2 hineinzubewegen. Dort wird von einem Arbeiter ein Werkstück W auf der Aufspannvorrichtung 5.1 aufgelegt und befestigt. Nachdem der Arbeiter sich von dem Ablagebereich 2 entfernt hat, geben die Sicherungseinrichtungen den Betrieb des Handhabungsroboters 5 wieder frei. Falls die Stanzeinrichtung 4 bereits das für die Bearbeitung des aufgespannten Werkstücks W vorgesehene Werkzeug enthält, wird der Handhabungsroboter 5 unmittelbar angesteuert, das Werkstück W in einer vorbestimmten Lage in dem Stanzwerkzeug 4.1 zu positionieren. Anschließend wird die Stanzeinrichtung 4 angesteuert, um den gewünschten Ausschnitt oder das gewünschte Fenster aus dem Werkstück W auszustanzen. Es können sich weitere Schritte zum Neupositionieren des Werkstücks W und Ausstanzen weiterer Öffnungen mit demselben Stanzwerkzeug 4.1 anschließen.

Falls zu Beginn oder zur weiteren Bearbeitung des Werkstücks W mit der Stanzeinrichtung 4 ein Wechsel des Stanzwerkzeugs 4.1 erforderlich ist, wird der Handhabungsroboter 5 angesteuert, mit der Aufnahme 5.3 das in der Stanzeinrichtung 4 befindliche Stanzwerkzeug 4.1 zu greifen und in dem Stanzwerkzeugmagazin 4.5 an einem freien Platz abzulegen. Anschließend wird der Handhabungsroboter 5 angesteuert, mit der Aufnahme ein anderes Stanzwerkzeug 4.1 aus dem Stanzwerkzeugmagazin 4.5 zu entnehmen und in die Stanzpresse 4.2 einzusetzen. In der nicht dargestellten Steuereinrichtung für den Handhabungsroboter 5 werden die Daten zu dem in der Stanzpresse 4.2 befindlichen Stanzwerkzeugs 4.1 gespeichert. Während des Wechsels des Stanzwerkzeugs 4.1 bleibt das noch nicht oder teilweise bearbeitete Werkstück W in der Aufspannvorrichtung 5.1 aufgespannt. Dadurch kann der Handhabungsroboter 5 unmittelbar nach dem Wechsel des Stanzwerkzeugs 4.1 das Werkstück W in der nächsten für die Bearbeitung vorgesehenen Lage in der Stanzpresse 4.2 positionieren.

Nach Abschluss aller Bearbeitungsschritte in der Stanzvorrichtung 4 wird der Handhabungsroboter 5 angesteuert, das bearbeitete Werkstück W in dem zweiten Ablagebereich 3 hinein zu bewegen. Dort wird das Werkstück W nach Stilllegung des Handhabungsroboters 5 durch einen Arbeiter von der Aufspannvorrichtung 5.1 gelöst und aus der Bearbeitungsstation 1 entnommen.

Bei Zufuhr von Werkstücken mit einer anderen Geometrie muss vor dem Aufnehmen des Werkstücks aus dem ersten Ablagebereich 2 die Aufspannvorrichtung 5.1 des Handhabungsroboters 5 ausgetauscht werden. Dazu wird der Handhabungsroboter 5 angesteuert, die anhängende Aufspannvorrichtung 5.1 in einem freien Haltegestell 8.1 abzulegen und eine an die neue Werkstückgeometrie angepasste andere Aufspannvorrichtung 5.2 aus einem anderen Haltegestell 8.2 aufzunehmen. Anschließend kann die Bearbeitung mit dem Aufnehmen des Werkstücks W durch den Handhabungsroboter 5 beginnen.

Die beschriebene Bearbeitungsstation 1 kann für weitere Bearbeitungsmaßnahmen in einfacher Weise fortgebildet werden. Dazu müssen lediglich weitere Bearbeitungsvorrichtungen innerhalb des Arbeitsbereichs des Handhabungsroboters 5 angeordnet. Dies können beispielsweise Klebevorrichtungen, Bohrvorrichtungen oder Fräsvorrichtungen sein. Die Bearbeitung mit diesen Stationen vollzieht sich in gleicher Weise wie die vorstehende beschriebene Bearbeitung mit der Stanzvorrichtung.

Ferner lässt sich die beschriebene Bearbeitungsstation 1 durch eine Erweiterung der Aufspanneinrichtung 5.1 für die Bearbeitung des aufgespannten Werkstücks zweckmäßig ausgestalten. Insbesondere kann die Aufspanneinrichtung 5.1 mit Einrichtungen zum Applizieren von Klebstoffen oder Klebefolien ausgerüstet sein. Auf diese Art können weitere Bearbeitungsmaßnahmen während der Handhabungsphasen, also während der Zeiten des Transports, Drehens oder Positionierens des Werkstücks, und damit ohne.Verlängerung der Taktzeit realisiert werden. Allerdings müssen die beschriebenen Zusatzeinrichtungen in allen bauteilspezifischen Aufspanneinrichtungen 5.1 vorgesehen werden, was die Werkzeugkosten erhöht.

## Patentansprüche

1. Bearbeitungsstation (1), insbesondere zum Bearbeiten von Fahrzeugverkleidungsteilen unterschiedlicher Geometrie, aufweisend eine Anzahl von Ablagebereichen (2, 3) für die Zufuhr und Entnahme der Werkstücke (W), einen Handhabungsroboter (5) mit einer Aufspanneinrichtung (5.1) zum Aufspannen und Handhaben der Werkstücke (W), und eine Stanzvorrichtung (4) zum Bearbeiten der Werkstücke (W), wobei die Stanzeinrichtung (4) eine Anzahl verschiedener Stanzwerkzeuge (4.1, 4.3) umfasst, die in einem Stanzwerkzeugmagazin (4.4) im Bewegungsbereich des Handhabungsroboters (5) vorgehalten und aus diesem entnehmbar sind, um in eine Stanzpresse (4.2) eingesetzt zu werden, wobei der Handhabungsroboter (5) mit einer Aufnahme (5.2) für das Greifen eines Stanzwerkzeugs (4.1, 4.3) ausgestattet ist, **dadurch gekennzeichnet, dass** die Benutzung der Aufnahme für das Greifen eines Stanzwerkzeugs (4.1, 4.3) mit einem in der Werkstückaufnahme (5.1) aufgespannten Werkstück (W) möglich ist, und wobei die Aufspanneinrichtung (5.1) durch eine Wechselhalterung mit dem Handhabungsroboter (5) verbunden ist, und in dessen Bewegungsbereich eine Anzahl weiterer Aufspanneinrichtungen (5.1) in der Bearbeitungsstation (1) angeordnet ist.

2. Bearbeitungsstation (1) nach Anspruch 1, wobei innerhalb des Bewegungsbereichs des Handhabungsroboters (5) weitere Bearbeitungseinheiten, insbesondere Klebe-, Bohr- oder Fräsvorrichtungen, angeordnet sind.

3. Bearbeitungsstation (1) nach einem der vorangehenden Ansprüche, wobei die Aufspanneinrichtung (5.1) zusätzliche Mittel zur Bearbeitung des aufgespannten Werkstücks (W) und insbesondere Einrichtungen zum Auftragen von Klebstoffen oder Klebfolien aufweist.

4. Verfahren zum Betrieb einer Bearbeitungsstation (1) nach einem der vorangehenden Ansprüche mit Schritten zum Bereitstellen eines Werkstücks (W) in einem der Ablagebereiche (2, 3), Ansteuern des Handhabungsroboters (5) zum Aufnehmen des Werkstücks (W) aus dem Ablagebereich (2, 3) mit der Aufspanneinrichtung (5.1);
weiterem Ansteuern des Handhabungsroboters (5) zum Greifen eines Stanzwerkzeugs (4.1) aus dem Stanzwerkzeugmagazin (4.5) und Einsetzen des Stanzwerkzeugs (4.1) in die Stanzpresse (4.2);
weiterem Ansteuern des Handhabungsroboters (5) zum positionieren eines Abschnitts des Werkstücks (W) im Bereich des in der Stanzpresse (4.2) aufgenommenen Stanzwerkzeugs (4.1); und
Ansteuern der Stanzeinrichtung (4) zum Anbringen einer Ausstanzung in dem Werkstück (W) ,**dadurch gekennzeichnet, dass** in einem vorausgehenden Schritt der Handhabungsroboter (5) angesteuert wird, um die anhängende Aufspanneinrichtung (5.1) durch eine in der Bearbeitungsstation (1) vorgehaltene andere Aufspanneinrichtung (5.1) zu ersetzen

5. Verfahren nach Anspruch 4 zum Betrieb einer Bearbeitungsstation (1) nach Anspruch 3, wobei während der Handhabungsphasen die zusätzlichen Mittel an der Aufspanneinrichtung (5.1) angesteuert werden zur Bearbeitung des Werkstücks (W).

## Claims

1. Machining station (1), in particular for machining vehicle trim parts of varying geometry, having a number of deposition areas (2, 3) for feeding and removing the workpieces (W), a handling robot (5) having a clamping device (5.1) for clamping and handling the workpieces (W), and a punching apparatus (4) for machining the workpieces (W), wherein the punching device (4) comprises a number of different punching tools (4.1, 4.3) which are stored in a punching tool magazine (4.4) in the area of movement of the handling robot (5) and can be removed therefrom in order to be inserted into a punch press (4.2), wherein the handling robot (5) is equipped with a receptacle (5.2) for gripping a punching tool (4.1, 4.3), **characterized in that** it is possible to use the receptacle for gripping a punching tool (4.1, 4.3) with a workpiece (W) clamped in the workpiece receptacle (5.1), and wherein the clamping device (5.1) is connected to the handling robot (5) by an interchangeable holder, and a number of further clamping devices (5.1) are arranged in the machining station (1) in the area of movement of the handling robot (5).

2. Machining station (1) according to Claim 1, wherein further machining units, in particular adhesive-bonding, boring or milling apparatuses, are arranged within the area of movement of the handling robot (5).

3. Machining station (1) according to either of the preceding claims, wherein the clamping device (5.1) has additional means for machining the clamped workpiece (W) and in particular devices for applying adhesives or adhesive films.

4. Method for operating a machining station (1) according to one of the preceding claims, having steps for providing a workpiece (W) in one of the deposition areas (2, 3), actuating the handling robot (5) to pick up the workpiece (W) from the deposition area (2, 3) with the clamping device (5.1);
further actuating the handling robot (5) to grip a punching tool (4.1) from the punching tool magazine (4.5) and inserting the punching tool (4.1) into the punch press (4.2); further actuating the handling robot (5) to position a section of the workpiece (W) in the area of the punching tool (4.1) received in the punch press (4.2); and
actuating the punching device (4) to punch out a portion of the workpiece (W), **characterized in that**, in a preceding step, the handling robot (5) is actuated to replace the attached clamping device (5.1) with another clamping device (5.1) stored in the machining station (1).

5. Method according to Claim 4 for operating a machining station (1) according to Claim 3, wherein, during the handling phases, the additional means on the clamping device (5.1) are actuated to machine the workpiece (W).

## Revendications

1. Station de traitement (1), notamment pour le traitement de pièces d'habillage de véhicule de formes géométriques différentes, comportant un certain nombre de zones de dépôt (2, 3) pour l'amenée et le retrait des pièces usinées (W), un robot de manipulation (5) doté d'un dispositif de fixation (5.1) pour fixer et manipuler les pièces usinées (W) et un dispositif d'estampage (4) pour usiner les pièces usinées (W), le dispositif d'estampage (4) comprenant un nombre de différents outils d'estampage (4.1, 4.3) conservés dans un magasin d'outils d'estampage (4.4) placé dans une zone de déplacement du robot de manipulation (5) et pouvant en être retirés pour être utilisés dans une presse d'estampage (4.2), le robot de manipulation (5) étant équipé d'un logement (5.2) pour se saisir d'un outil d'estampage (4.1, 4.3), **caractérisée en ce que** l'utilisation du logement servant à saisir l'outil d'estampage (4.1, 4.3) est possible avec une pièce usinée (W) fixée dans le logement de pièce usinée (5.1) et le dispositif de fixation (5.1) étant relié au robot de manipulation (5) par un support alternatif et un certain nombre de dispositifs de fixation (5.1) supplémentaires étant disposés dans la station de traitement (1) au niveau de la zone de déplacement dudit robot.

2. Station de traitement (1) selon la revendication 1, des unités de traitement supplémentaires, notamment des dispositifs de collage, d'alésage ou de fraisage, étant disposées à l'intérieur de la zone de déplacement du robot de manipulation (5).

3. Station de traitement (1) selon l'une quelconque des revendications précédentes, le dispositif de fixation (5.1) comportant des moyens supplémentaires de traitement de la pièce usinée (W) fixée et notamment des dispositifs permettant d'appliquer des colles ou des films de colle.

4. Procédé d'exploitation d'une station de traitement (1) selon l'une quelconque des revendications précédentes avec les étapes suivantes :
mise à disposition d'une pièce usinée (W) dans une des zones de dépôt (2, 3), pilotage du robot de manipulation (5) pour loger la pièce usinée (W) provenant de la zone de dépôt (2, 3) à l'aide du dispositif de fixation (5.1) ;
poursuite du pilotage du robot de manipulation (5) pour saisir un outil d'estampage (4.1) provenant du magasin d'outils d'estampage (4.5) et pour placer l'outil d'estampage (4.1) dans la presse d'estampage (4.2) ;
poursuite du pilotage du robot de manipulation (5) pour positionner une section de la pièce usinée (W) dans la zone de l'outil d'estampage (4.1) logé dans la presse d'estampage (4.2) ; et
pilotage du dispositif d'estampage (4) pour appliquer un estampage dans la pièce usinée (W) ; **caractérisé en ce que** lors d'une étape précédente, le robot de manipulation (5) est piloté pour remplacer le dispositif de fixation (5.1) rattaché par un autre dispositif de fixation (5.1) stocké dans la station de traitement (1).

5. Procédé selon la revendication 4 pour exploiter une station de traitement (1) selon la revendication 3, les moyens supplémentaires étant pilotés pendant les phases de manipulation au niveau du dispositif de fixation (5.1) pour réaliser le traitement de la pièce usinée (W).
